(19) Europäisches Patentamt
European Patent Office
Office européen des brevets

(11) **EP 2 595 059 B1**

(12) **EUROPEAN PATENT SPECIFICATION**

(45) Date of publication and mention
of the grant of the patent:
**01.10.2014 Bulletin 2014/40**

(51) Int Cl.:
***G06F 11/263*** (2006.01)　　　***G06F 11/273*** (2006.01)

(21) Application number: **12154651.9**

(22) Date of filing: **09.02.2012**

(54) **Test processor for asynchronous chip test**

Testprozessor für asynchronen Chiptest

Processeur de test pour test de puce asynchrone

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.11.2011 EP 11189849**

(43) Date of publication of application:
**22.05.2013 Bulletin 2013/21**

(73) Proprietor: **IHP GmbH-Innovations for High
Performance
Microelectronics / Leibniz-Institut für innovative
Mikroelektronik
15236 Frankfurt / Oder (DE)**

(72) Inventors:
• **Zeidler, Steffen
10779 Berlin (DE)**
• **Krstic, Milos
15230 Frankfurt/Oder (DE)**
• **Wolf, Christoph
15236 Frankfurt/Oder (DE)**
• **Kraemer, Rolf
15517 Fürstenwalde (DE)**

(74) Representative: **Eisenführ Speiser
Patentanwälte Rechtsanwälte PartGmbB
Anna-Louisa-Karsch-Strasse 2
10178 Berlin (DE)**

(56) References cited:
**WO-A2-2004/070395　　US-A1- 2009 113 245
US-A1- 2010 023 820　　US-A1- 2010 185 909**

EP 2 595 059 B1

**Description**

I. BACKGROUND ART

The ongoing evolution in semiconductor industries allows the Integration of a complete System within a Single chip. However, the Integration of a complex System into a Single synchronous design may introduce upcoming issues including process variations, clock skew, distribution of the clock Signal, increased electro-magnetic interference (EMI) due to simultaneous switching activity etc.. Thus, designers have to consider the use of alternative design methodologies rather than the pure synchronous design approach.

Purely asynchronous, globally-asynchronous locally-synchronous (GALS) and de-synchronization design techniques seem to be a promising Option to overcome these issues. The basic concept of data transfer in such systems is based on handshaking. Handshaking systems are more robust against process variations, offer improved modularity and are suitable for security applications such as smart cards.

Due to these properties much research is being carried out in the field of asynchronous circuit design. This includes circuit development itself as well as development of tools in order to automate the design flow. The complementary research field is verification and test. Several methods have been proposed that structurally test asynchronous circuits by using adjusted scan techniques. A further standard technique is the adaption and Integration of Built-In Self-Test (BIST) into asynchronous designs. Furthermore, on-line test techniques have been applied, e.g., to check the correct operation of asynchronous protocols.

Apart from these well established test methods mainly applied in production test, further test strategies are required for debugging during the prototype design phase. Here, in addition to structural tests used to detect manufacturing defects, functional tests of the developed design play a major role in order to prove the concept. Such functional tests are based on patterns gained from functional simulation of the chip that are either event-based - e.g., EVCD-files - or cycle-based - e.g., WGL-files. No matter which pattern type is used the related tester equipment exactly performs the actions described in the pattern. The problem with asynchronous and GALS designs is that they may behave nondeterministically regarding their timing. This behavior cannot be described using standard patterns and, therefore, not be handled by both strictly cycle-oriented and event-based hardware testers. As a consequence, a test may fall, although the device is fault-free.

Purely asynchronous and GALS design methodologies are applied to tolerate process, voltage and temperature variations (PVT) as well as to lower the emission of electromagnetic interference (EMI). Such designs make usage of handshake protocols in order to synchronize the modules during data transfer. The circuitry used to generate the respective handshake signals is mainly realized by asynchronous logic composed of special asynchronous cells such as Muller-C and MUTEX elements for synchronization and arbitration. These cells, especially MUTEX cells, may run through an undetermined time of meta-stability before their outputs become stable. Placing such elements in the control logic of a circuit, as usually done in asynchronous designs, leads to nondeterminism in the timing behavior of the entire circuit. Thus, a response of an asynchronous design-under-test (DUT) may occur in a specific time interval rather than at a specific point in time as usual for synchronous designs, where all output signals are aligned to a clock signal. This leads to problems when an asynchronous design shall be tested using a standard tester equipment.

A further problem is the fact that a standard hardware tester is not able to react on signal events generated by the DUT. Therefore, it is not possible to implement a handshake mechanism between the DUT and the tester or to let the tester capture data aligned to a clock signal generated by the DUT. The same is true for event-based testers which are not able to react on signal events from the DUT either. The term event-based tester is related to the fact that such testers do not need a cyclization of the test patterns.

Due to these problems, a test methodology known as BIST is mainly used to perform functional tests. However, BIST technologies are very limited in debugging the produced designs and should, therefore, be complemented by further mechanisms to perform functional tests. To this end, an approach called Synchro-Tokens was developed to provide a way to eliminate nondeterminism of GALS designs. The approach of Synchro-Tokens uses a token ring with a node on each of two communicating modules. The token is exchanged in a deterministic order resulting in a timing determinism of the entire GALS System. However, this architecture is only applicable to GALS designs, where the number of communicating modules is very limited. The additional overhead for the token exchange makes this methodology unfeasible for purely asynchronous designs.

The usage of a test processor (TP) component for extending the available tester hardware is not a new concept. Several publications proposed TP Solutions to implement programmable linear-feedback shift-registers. It is also known to implement a multiple seed, multiple polynomial linear feedback shift register that also supports scan-path testing. Another design of a prototype TP can be used for functional testing of digital ICs. This processor can generate pseudo-random followed by deterministic test vectors and receive the Output responses of the DUT and compress them. A further known TP solution was designed to enable self-tests of system-on-chips (SoCs). The processor has a simple RISC architecture and is of low overhead. It contains specially adopted registers to realize LFSR or MISR functions for pattern de-compaction and pattern filtering. This concept was extended by making the processor design configurable and enabling the support of build-in logic tests.

US 2009/0113245 describes an automatic tester equipment (ATE) forming a protocol specific circuit for simulating a functional operational environment into which a device-under-test is placed for functional testing. The protocol specific circuit includes a protocol aware circuit constructed to switch between deterministic and non-deterministic operation. In non-deterministic operation, the circuit receives a non-deterministic signal communicated by a device-under-test and initiates a transfer of a test stimulus signal to the device-under-test in response to the non-deterministic signal, in order to determine an operational condition of the device-under-test.

SUMMARY OF THE INVENTION

The present invention provides a new concept of how elastic, functional tests of an asynchronous design can be performed using a test processor (TP) Solution.

In accordance with a first aspect of the invention, a test processor for testing an integrated circuit component, hereinafter DUT, is provided. For clarification, it is noted that the DUT is arranged externally to the claimed test processor and thus does not form a part of the claimed test processor. The test processor is for use in testing DUTs, which are configured to asynchronously communicate with the test processor. The claimed test processor comprises:

- a test processor core,

- a port component, which

    a) is connected with the test processor core and which

    b) comprises a first set of ports, hereinafter I/O ports, which are configured to perform synchronous communication with a tester equipment that is external to the test processor and to which the test processor is connectable, and which

    c) comprises a second set of ports, hereinafter handshake ports, which are configured to perform asynchronous communication with a DUT to which the test processor is connectable, using an asynchronous handshake protocol,

- a memory interface, which is connectable to the tester equipment and to a memory for storing test patterns to be communicated to the DUT and for storing at least one test program executable by the test processor, the memory interface being configured to perform memory operations in accordance with instructions received from the test equipment.

Embodiments are defined in the dependent claims.

In the approach of the present invention communication between the test equipment, which hereinafter is also referred to as the tester, and the DUT is established in an easily adjustable and programmable manner using the provided TP Solution. To this end the TP is used to apply and receive patterns including handshake signalling sequences, whose nondeterminism is compensated by the processor, ending up in an elastic test.

The test processor provides special support of asynchronous handshake protocols. This may be implemented as an extension of a standard I/O port component by circuitry dedicated to asynchronous handshake signaling and by providing instructions that control this circuitry.

The TP itself is configured to be placed between the tester and the DUT. It provides a first set of standard synchronous interface ports to the tester and a second set of ports supporting asynchronous handshaking to the DUT. In order to store test patterns for the DUT as well as the test program for the processor, a memory is required. Its interface is configured to support write and read operations from and to different sources and destinations, respectively. In one embodiment, besides the standard read/write operations required by the TP, the interface is configured to provide memory operations, such as write operations coming from the tester side in order to program the processor and to upload test patterns. Therefore, the test equipment is preferably directly connected with the memory interface enabling the tester to define the address and to write data into or to read data from the memory.

The entire solution makes use of the following main components: the TP core, the port component, the memory interface, and the memory. Due to a typically large overhead, the memory is preferably placed outside of a chip implementing the test processor. The memory may for instance be integrated into the tester equipment.

The TP itself can, if carefully designed, be realized in different ways described below. In practice it depends on the device which of these approaches shall be used.

The simplest solution from the tester point of view is the complete Integration of the TP into the device-under-test. This has the major advantage that the processor could have further access to internal signals of the design, thus, resulting in improved debugging capabilities. However, the overhead of integrating the processor into the DUT may be too large and, therefore, unsuitable for some designs. Nevertheless, the integration of the TP into the design can be feasible under consideration of the possibility to perform self-tests when the design is already mounted into the target system. Furthermore, the processor can also be used for other tasks in the design, e.g. power management.

The second possibility is to integrate the test processor into a test arrangement, for instance by placing the processor onto a load board of the tester equipment. This approach does not require any additional silicon area for the DUT to enable this test concept. However, there is no possibility for the processor to access internal signals of the DUT. Moreover, the load board has to be specifically designed for the DUT and can most likely not be reused for a different design. For high-volume industrial designs it is quite common that a load board is designed just for one device. But in prototyping phase, silicon debug and small series production it is useful to reuse existing boards as far as possible in order to minimize costs.

The last possibility is to combine both approaches leading to a mixed Implementation. One possible solution is to place the asynchronous part of the port component into the DUT. This will, of course, increase the overhead for the technique from the DUT point of view, but has the advantage of accessing internal signals while keeping the overhead for this at a minimum.

BRIEF DESCRIPTION OF THE DRAWINGS

Fig. 1 shows a high-level block diagram of an embodiment of a test arrangement of the invention.

Fig. 2 shows a simplified block diagram of an embodiment of the test processor of the invention.

Fig. 3 shows a block diagram of a an embodiment of a test arrangement resolving additional detail of the test processor and its port component;

Fig. 4 shows additional detail of a port component in accordance with an embodiment of the invention;

Fig. 5 shows a flow diagram for a workflow for implementing a processor and test design

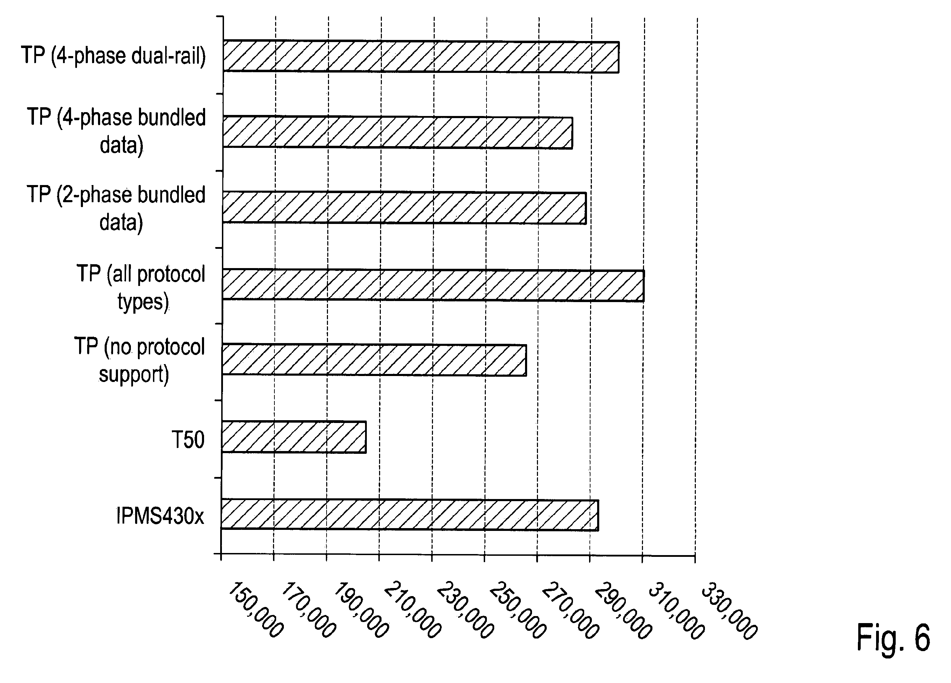

Fig. 6 shows a comparison of performance results of an embodiment of the proposed processor design with prior art designs.

Fig. 7 shows a schematic block diagram of a second embodiment of a test arrangement including a second embodiment of test processor.

Fig. 8 shows a block diagram of a I/O-port of the test processor of the second embodiment.

Fig. 9 shows a schematic block diagram of handshake port of the test processor of the second embodiment.

DETAILED DESCRIPTION OF EMBODIMENTS

In the following, embodiments of implementation and instructions of the test processor and the test arrangement are described. Then, a workflow to integrate the TP into the test strategy is outlined. Subsequently, experimental results are given.

A. Embodiment 1

a. Architecture of the test processor

The TP of one embodiment is a 16-bit RISC processor supporting 53 instructions. The most important standard instructions are:

Arithmetic: ADD, ADDI, SUB, SUBI

Logic: INV, AND, OR, XOR, SHL, SHR

Branch: JHP, JMPR, JMPZ, JMPGZ, JMPLZ, JMPNZ

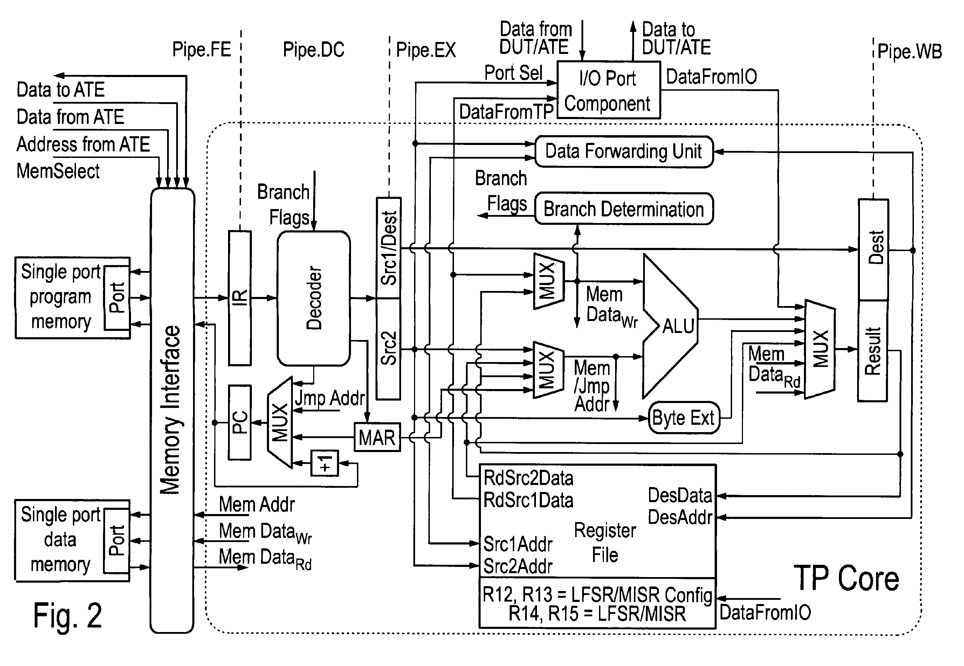

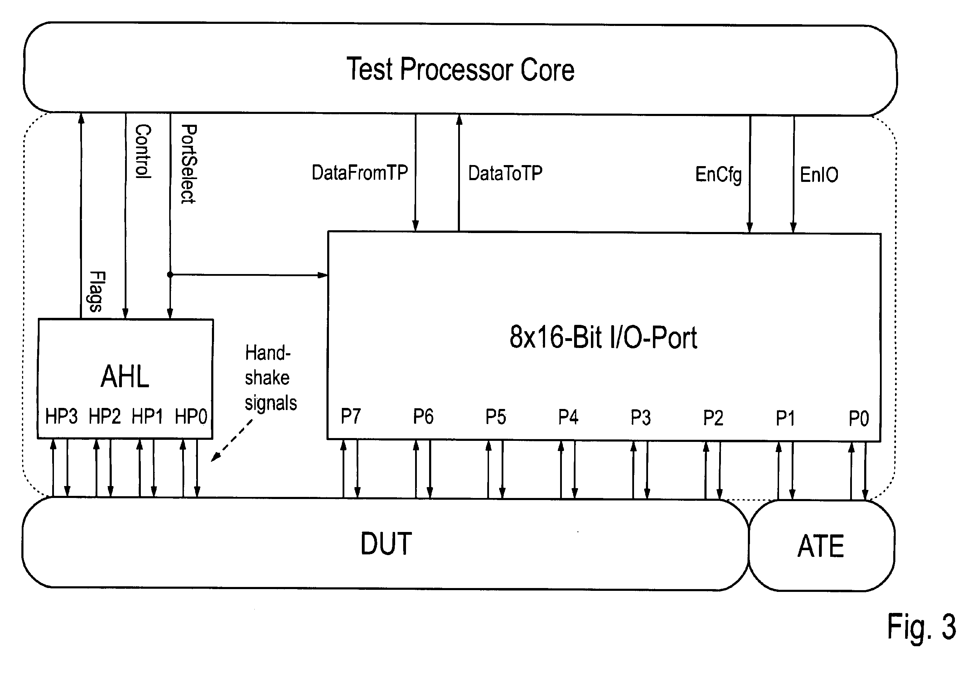

Besides these instructions the processor provides special operations in order to support asynchronous handshaking and operations to ease pattern generation required for performing tests. Since many asynchronous devices are designed to process their data with high-throughput, the processor needs to be fast in order to perform functional tests. Therefore, the processor has a four stage processor pipeline (FE, DC, EX, WB) with operand forwarding, thus, is able to execute programs with minimal time overhead. A simplified block diagram of an embodiment of the processor is given in Fig. 2. The following description also refers to Fig. 3, which shows a block diagram of a part of a section of an embodiment of a test processor resolving additional detail of the port component.

The TP design itself preferably operates synchronously which allows the integration of scan paths. This drastically increases the testability of the TP if the on-chip approach is selected to implement the test strategy.

The architecture of the register file contains 16 general purpose registers (GPRs), wherein two of them (R13, R15) can act as linear feedback shift registers or multiple input signature register (LFSR/MISR). Two further GPRs (R12, R14) are used for configuring the feedbacks of the LFSR.

In order to generate signatures using the LFSR/MISR registers the TP of one embodiment provides at least one of the following special instructions:

LFSRL/LFSRH: generate signature in R13/R15

LFSRLP/LFSRHP: Px write the current value of R13/R15 to I/O port Px and generate new signature

MI SRL/MI SRH Rx: combine signature in R13/R 15 with the value of register Rx

MISRLP/MISRHP Px: combine signature in R13/R15 with the value of I/O port Px

For the interaction with the tester and the DUT, respectively, the processor offers the previously mentioned port component that contains a first set of ports that may for instance be formed by eight standard synchronous 16bit I/O ports.

Furthermore, in order to perform handshake signaling, the port component provides at least one second set of ports, which may for instance accommodate four handshake signal pairs and are totally independent from the I/O ports. Thus, the test engineer has the full flexibility to connect and to program the processor according to the demands and specification of the DUT. For example, one can imagine that the width of the data word to be sent or received exceeds 16 bits. Then the test engineer can connect, e.g., ports P2 and P4 (Fig. 3) with the corresponding signals of the data word and use, e.g., handshake signal port HP0 for performing the handshake.

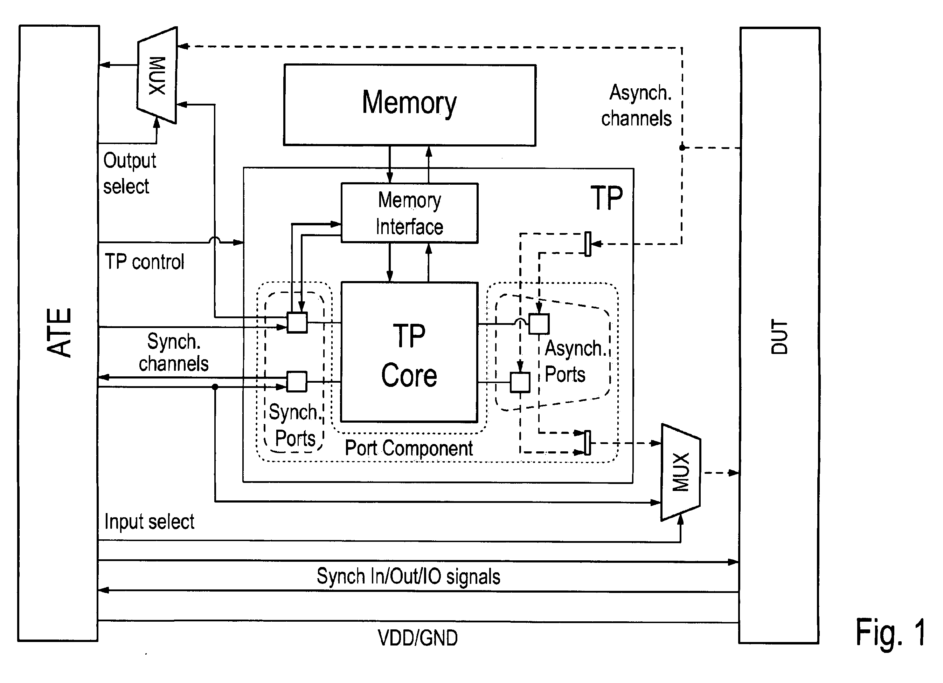

One embodiment of the test arrangement of Fig. 1 has a memory that is organized in the form of separated data and program memories. Both may for instance be realized using single port memory blocks. This reduces the overhead in comparison to one dual port memory for a unique block containing both memory sections. However, the memory may be organized in a different manner, for instance in the form of a single memory for both, test data and program files.

The memory interface for communication with the memory blocks is designed to allow external accesses from the ATE in order to program the processor and to fill the data memory (e.g. with test patterns). The processor has an address space of $2^{16}$ 16-bit words of data and program memory space, respectively. Currently, there are two modes to access the memory:

Via memory address register for the entire address space to load data using labels (2 instructions required, 1st for loading the address, 2nd for reading/writing the data)

Via GPR (requires 1 Instruction, but it requires more effort to load the address of the data using labels)

b. Architecture of port component

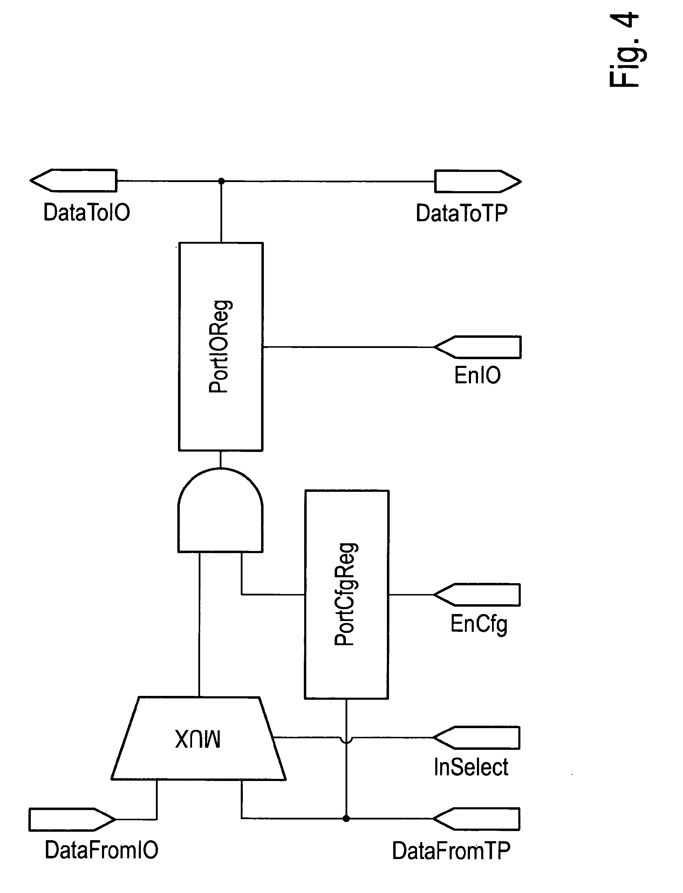

Reference is now made to Figs. 3 and 4. Fig. 3 shows a more detailed block diagram of a test processor embodiment. An I/O port component of this test processor has eight 16-bit I/O ports. Each port can either be connected to the test equipment ATE or to the DUT, depending on the demands of the test application.

As illustrated in Fig. 4, each port contains one I/O port register, one configuration register and some additional logic to select the input for the registers. The I/O register stores the data strobed from or to be applied to the DUT, respectively. The configuration register stores a mask to specify significant bits of the I/O register. This is useful to mask undetermined values (X-values) potentially present in a test response of the DUT.

In order to write into and to read from the I/O register, respectively, the processor provides two instructions: PIN and POUT. Accordingly, the mask register can be configured and read out using the PRCFG and PWCFG instructions.

PIN - writes a data word from a synchronous I/O-Port into a register,

POUT - writes a data word into an I/O-Port. PWCFG - writes a data word (bit mask) from a register in to a mask register of an I/O port.

PRCFG reads a data word from the mask register into a register.

In one embodiment, additional commands are provided, which are LWP (load word to port), and swp (store word from port). This way, a data word is stored directly from the memory into a port, or the other way round, respectively. This allows achieving a considerable acceleration in program execution.

Moreover, the port component includes the logic block that realizes asynchronous handshake signaling. In one embodiment, the block provides four handshake signal ports to the DUT. However, the number of handshake ports (HP) can be further sealed. Each HP comprises an input port used for requests or acknowledges coming from the DUT and an output port used for requests or acknowledges coming from the TP.

For the realization of the dual-rail protocol a different mechanism is employed, since in this type of protocols the request is encoded within the data word. Therefore, each data bit requires two signals ($d_f d_t$) used to encode a logic-0 (10), a logic-1 (01) or the null-value (00). To implement this, two consecutive ports $P_x$ and $P_{x+1}$ ($x \in \{0,2\}$) encode the dual-rail data word. Thus, data bit at position i is a valid dual-rail encoded value if

$$P_x[i] = \overline{P_{x+1}[i]}.$$

c. Instructions to support asynchronous handshaking

The processor of one embodiment is configured to support different types of asynchronous handshake protocols, i.e. 2-phase single-rail, 4-phase-single-rail and 4-phase-dual-rail.

The processor is designed such that it performs all necessary steps to set and receive requests/acknowledgments according to the protocols currently supported. In order to enable asynchronous handshaking the processor provides special instructions divided into different groups.

The following instructions are used for the initialization of the port component:

SAHP type - Sets asynchronous handshake protocol type (type $\epsilon$ {single_rail_2_phase, single_rail_4_phase, dual_rail_4_phase})

SRO/SAO/SRI/SAI State - Set initial states of handshake signals (state = 0bs$_3$s$_2$s$_1$s$_0$; s$_i$ $\epsilon$ {0, 1}).

This is required for supporting protocols that do not start with all handshake signals set to logic-0.

After defining the protocol type and the initial values of the handshake signals the processor is set up to perform handshakes. Therefore, there are two types of Instructions, namely active and passive handshake instructions. Active handshake instructions are used to set a request or an acknowledgment. Active handshake instructions are:

SREQ/SACK HPx - Sets request / acknowledgment to initiate data transmission or indicate data receipt at handshake signal port HPx.

PDROUT Ry, Px - writes dual-rail encoded data from a source register to two consecutive I/O data ports (Px[i] = Ry, P(x+1)[i] = $\overline{Ry}$)

On the other hand, there are two types of passive handshake instructions, i.e. branch and wait-for instructions. The major difference between these instruction types is that branch instructions perform a branch in case of a detected signal event coming from the DUT. Thus, the branch instructions - BREQ/BACK HPx, @RDestAddr - branch to the destination defined by register RDestAddr if an incoming request / acknowledgment is detected on handshake signal port HPx. In comparison to that, wait-for instructions stall the pipeline of the processor until a signal event is detected. Hence, the wait-for instructions -- WFREQ/WFACK HPx, AFTER RTimeout JMP @RDestAddr -- stall the entire pipeline of the pipeline and wait for a request / acknowledgment at handshake port HPx. In order to prevent program deadlocks, the wait-for instructions have two additional parametersone to specify a program address and one to determine the number of time units, which typically defined in terms of either one or more TP cycles (but may in alternative embodiments be defined in another suitable way) after which the test processor branches to the specified address. This can, e.g., be used to set an error flag. As mentioned, the branch instructions do not stall the pipeline of the processor. This offers more flexibility. For example, there might be situations where the processor is waiting for an acknowledgment at an input of the DUT while the DUT is also waiting for an acknowledgment of the processor. In this case wait-for operations are unsuitable. With usage of branch instructions one can, e.g., first test for the appearance of the acknowledgment of the DUT and, if not present, immediately test for a request of the DUT. However, the wait-for operations are much faster in reaction so their usage is recommended if the behavior of the DUT is strictly specified.

For the realization of 4-phase protocols there are two additional instructions in order to implement the return-to-zero phase of the protocol, i.e. RTZI/RTZO. These instructions perform two micro-operations at once. On the one hand the handshake signals or -- in case of a dual-rail protocol -- the data signals are set to the zero-value of the protocol, i.e. the initial value defined using the SAHP instruction. On the other hand, these instructions wait for the according signal event generated by the DUT. Thus, RTZI first waits until the request of the defined port is set to the initial value and then sets the acknowledgment to the initial value, while RTZO first sets the request to the initial value and then waits for the arrival of the acknowledgment from the DUT. Therefore, the format of these instructions is almost identical to the wait-for instructions: RTZI/RTZO HPx, AFTER RTimeout JMP @RDestAddr.

For modeling and designing the test processor, it is advantageous to use a processor description language, for example LISA, in combination with a processor designer, for instance CoWare's (now Synopsys') processor designer. This offers great advantages, e.g., easily adapting the core to the demands of the DUT via C preprocessor compiler directives; possibility of tool generation (assembler, de-assembler, compiler etc.); and the availability of the instruction based debugger. Additionally, the processor designer allows the integration of a debug interface into the generated processor. This eases testing the TP itself if it is integrated into the one implementation of the TP makes use of compiler directives in order to allow a configurable processor design. As an example, we mentioned before that the processor of this embodiment can be configured to support different types of asynchronous handshake protocols, i.e. 2-phase single-rail, 4-phase-singlerail and 4-phase-dual-rail. Thus, one can easily generate a processor supporting any subset of these protocols via setting the according preprocessor switches.

d. Programming the test processor

Listing 1 shows a code example of how a possible program of the TP can look like. The first action in a program for the proposed TP is the definition of the handshake protocol type. After that, one needs to define the initial values of the handshake signals. This is required for both input and output handshake signals, since the processor needs to know what has to be checked to indicate an incoming signal event and what needs to be done to generate the signal event according to the protocol. After this instruction sequence, the configuration of the mask for the I/O ports P0 and P1 is defined. In this example all bits of the I/O register are significant and, therefore, the mask is set accordingly. Then, the configuration of the feedbacks for the LFSR and MISR registers is defined. Here, R13 is used as LFSR to generate patterns and R15 is used as MISR to receive patterns and to store the resulting signature. Finally, the immediate value 10 is assigned to R0 which is later on used as a timeout for the wait-for operation. Additionally, the addresses of labels required for the branch instructions are loaded into R2-R4.

Listing 1: Program example

```
; Initialization
_main:
 SAHP 2_phase_single_rail ; setup protocol
 SRO 0b0000 ; setup initial
 SAI 0b0000 ; handshake signals
 SRI 0b1111 ; values for
 SAO 0b1111 ; (HPO-HP3)
 SHBS R0, Oxf ; configure I/O port mask
 PWCFG P0, R0 ; (mask of P0=0xffff)
 PWCFG P1, R0 ; (mask of P1=0xffff)
 SLB R12, 18 ; configure feedback
 SHB R12, 128 ; of LFSR
 INC R13, R13 ; setting up LFSR seed
```

```
SLB R14, 14 ; configure feedback
SHB R14, 167 ; of MISR
SLB R0, 10 ; set timeout
SLB R2, _din ; load address of _err
SLB R3, _din ; load address of _din
SLB R4, _dout ; load address of _dout
; Handshake sequence
_dout: ; move pattern to P0
 LFSRLP P0 ; and compute new pattern
 SREQ HP0 ; set HPO-REQout
 JMP @_breq ; loop
 _din: ; combine data in port
MISRHP P1 ; P1 with MISR signature
 SACK HP1 ; set HP0-ACKout
 JMP @_back loop
_back: ; wait for P0-ACKin
 WFACK HP0, AFTER R0 JMP @R2
 JMP @_dout ; jump to _dout after
          ; HP0-ACKin was detected
_breq: ; wait for P1-REQin
 BREQ HP1, @R3 ; jump to _din
 JMP @_back ; loop
_err:
 INC R1 ; inc error counter
 JMP @_req ; return to loop
```

After the initialization phase the processor is able to perform handshakes. The instruction block at label_dout is used to transfer the current pattern stored in the LFSR (R13) to I/O port P0 while simultaneously generating a new pattern and to set the respective request. Then, according to the program the sequence at label_breq is executed that performs a branch in case a request coming from the DUT is detected. If so, the processor jumps to label _din where the data coming from the DUT at I/O port P1 is strobed and combined with the signature in the MISR register R15. If not, it executes the code directly following the branch instruction. In this case the TP jumps to the upper part of the loop where the TP shall wait for the occurrence of an acknowledgment at handshake port HP0. At this point, the complete pipeline is stalled until either the acknowledgment occurs or the maximum number of TP cycles exceeds the timeout limit defined by R0. In the first case the TP continues its operation and jumps to _dout. In the latter case the TP jumps to the error handling sequence that increases an error counter.

## B. Embodiment 2

The test processor of the second embodiment, which will be described in the following, serves to further improve the performance in comparison with the test processor of embodiment 1. It enables an increase of the maximum number of test patterns, which can be stored in the memory and improves the processor speed. A unitary solution is achieved for the different implementation approaches mentioned in the context of the first embodiment. In particular, the on-chip approach limits the complexity and the performance of the processor. As a consequence of the architecture, only a maximum of $2^{16}$ 16-bit test patterns may be addressed and stored. Furthermore, loading of test patterns and the storing of response signatures received from the DUT, and a comparison with the expected patterns require several instructions, which has a negative effect on the duration of the test. Additionally, the design of the processor of the present embodiment 2 enables operation under more than 25 MHz.

Embodiment 2 is specially adapted to an external implementation and enables the handling of much larger amounts of data (test patterns) and a faster processing of the data.

The processor of embodiment 2 is based on a 32-bit architecture, has an improved instruction set and an extended port architecture.

## a. Architecture of the test processor

Using a 32-bit architecture enables the use of much larger address space, a use of an extended instruction set as well as an improvement of numerous instructions. However, the pipeline architecture shown for embodiment 1 is maintained. Just as the architecture of embodiment 1, the architecture of the test processor of embodiment 2 has a four-stage pipeline architecture and supports operand forwarding. This way, all operations can be executed directly one after the other, without having to care for dependencies between data. The processor of embodiment 2 does not provide a configurability of the processor by means of pre-processor directives with regard to the support of selected handshake protocols. Accordingly, the processor supports all protocols. Another change of architecture concerns the addressing of the I/O-ports, which serve for communication with the DUT. The addressing of these ports is now done using register values instead of direct port indices.

Listing 2 below shows for comparison, how a data transfer is done in the architecture of embodiment 1 and in the architecture of embodiment 2.

Listing 2:

```
.data .allgn 4_
_P1_OUT: .word 0x0e8536fa 0xba312a98
. text
; implementation in atp 16
; loading of address and data
SLHW R1, _P1_OUT
SHHW R1, (_P1_OUT >> 8)
LD R2, (R1)
; direct addressing of port P1
POUT P1, R2
; implementation in at p32
; loading of address and data
lui r1, (_P1_OUT >> 16)
ori r1, r1, _P1_OUT
ld r2, 0(rl)
; indirect addressing of port P1
ldc r3, 1
out r3, r2
```

## b. Architecture of port component

The exchange of data between the TP and the DUT is done using 16 of the 2 32-bit I/O-ports. For synchronization with the DUT, the TP has 16 handshake ports, which each have an input and an output. The use of these inputs and outputs depends on the kind of asynchronous handshake protocol, and on the direction of data transfer. For instance, in the process of a data output initiated by the TP, when using a push protocol, the output of a handshake port is used as a request signal and the input of the asynchronous ports are used as acknowledgement signal.

Exactly as in embodiment 1, the use of the I/O-ports and of the handshake ports is freely selectable and independent from each other, thus achieving maximum flexibility. This way, an asynchronous channel, which is composed of a handshake port and a set of I/O-ports, is determined by the software of the TP. Regarding the interaction with the hardware of the tester, the TP is equipped with a simple interface, which allows writing data to the memory and reading from the memory, and additionally determining the status of the TP. As before, the memory allows storing program as well as pilot data.

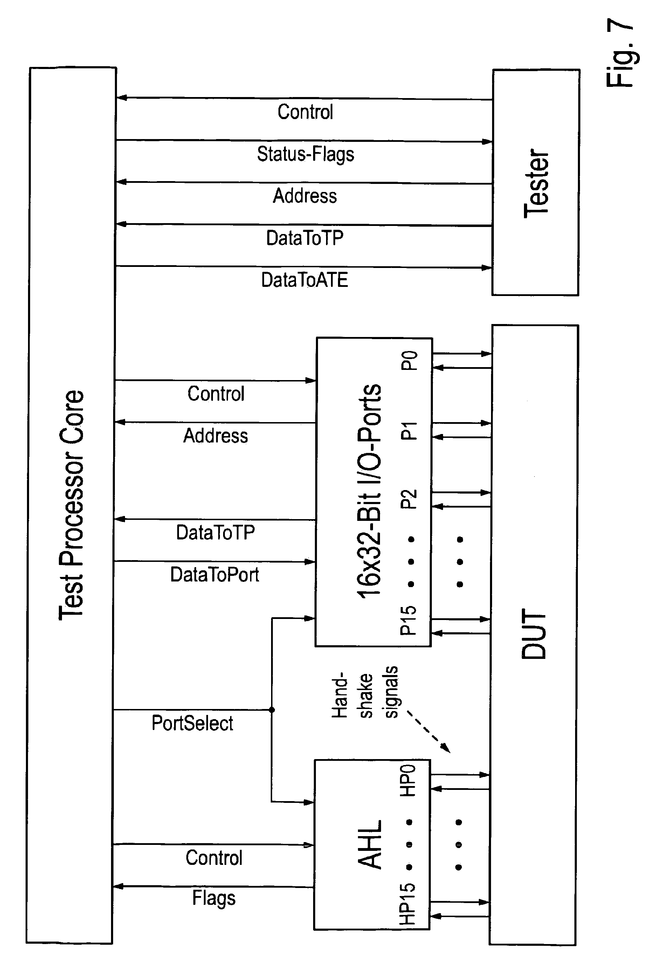

A schematic block diagram showing the most important interfaces of the test processor is given in Fig. 7.

In comparison with embodiment 1, the I/O-ports have additional components, which allow better emulating the complex hardware of the tester equipment. For instance, for each port a time span may be defined, by which all signals of a port are delayed. Furthermore, the test processor of embodiment 2 allows using certain pins of a port as input and other pins as output. A block diagram of the port architecture of the test processor of embodiment 2 is shown in Fig. 3. Fig. 3 shows one of the 16 I/O-ports.

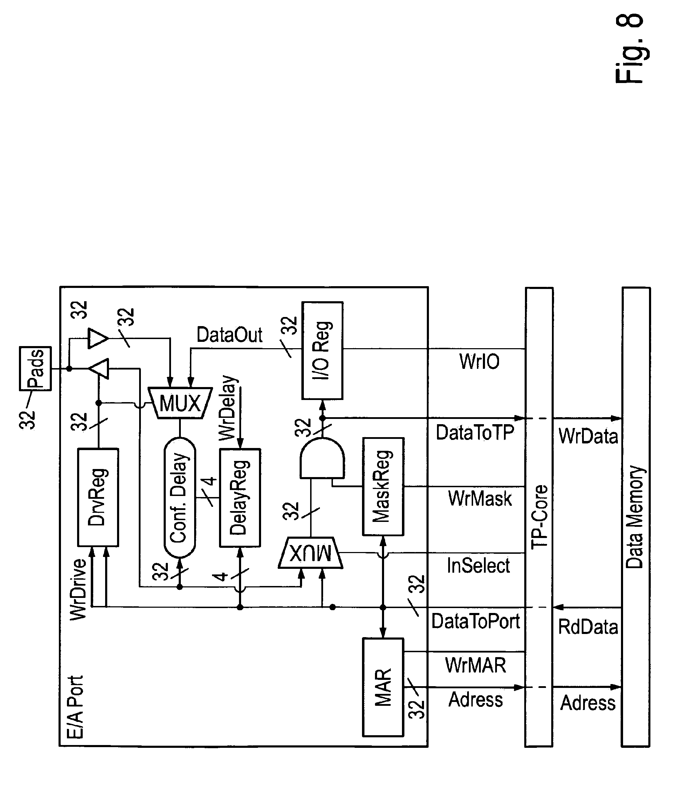

Fig. 8 shows a block diagram of a I/O-port of the test processor of the second embodiment. Connections represented by bold lines and components represented by blocks having bold outlines are to be interpreted as a bus connection or as multiple instances of the respective component. For instance, there is a respective pad for each bit of an I/O-port. As shown in Fig. 8, a I/O-port comprises several registers, configurable delay elements, logic components and multiplexers. A data register stores a signature proper, which is output by the port. A mask register serves for configuring, which bit of a signal bus *Data-To-Port* shall be changed or which bit of an input is significant. A delay register and a respective associated delay element serve for delaying the signals, as mentioned. The delay register comprises 4 bit, which results in a number of 16 different delay amounts. A driver register is used for defining input and output pins, respectively, of the port. This way, single bits of the I/O-port may be configured as input and other bits may be configured as output. It is also possible to realize the bidirectional pins in this manner. Furthermore, each I/O-port has an address register, which can be used to write input data from the I/O-port to the address of the memory stored in this register or read data from the memory into the I/O-register of the port. For setting the register values and for sending and receiving data via the I/O-ports, the processor provides the respective instructions.

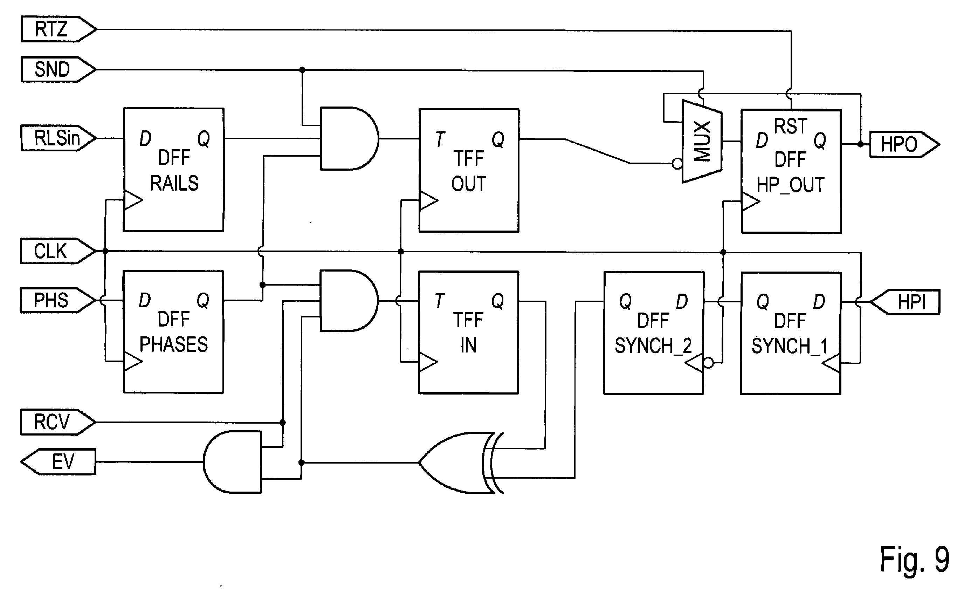

In comparison with an I/O-port the structure of a handshake port is simpler. Reference is made to Fig. 9, which shows a schematic block diagram of handshake port of the test processor of the second embodiment. The handshake port has a number of D flipflops (DFF), two toggle flipflops and logic gates. The DFFs *PHASES* and *RAILS* serve for storing the protocol type information (number of phases = 4 => Q(*PHASES*) = 0, number of phases = 2 => Q(*PHASES*) = 1; type of encoding of data = *Single-Rail* => Q(*RAILS*) = 0, type of encoding of data = *Dual-Rail* => Q(*RAILS*) = 1). The value of the DFFs *PHASES* is used for deciding whether or not the TFFs *IN* and *OUT* shall change their values. This only happens in the case of 2-phase protocols. For initializing a handshake port, the test processor provides an instruction *sahp RH Port, RConf,* which, besides the index of the port, has a bit mask as a parameter for configuring the handshake port. This bit mask comprises the type of the protocol as well as the initial values of the two TFFs *IN* and *OUT,* respectively. In comparison with the test processor of embodiment 1, the test processor of embodiment 2 allows defining a defend protocol for each port. In embodiment 1, the protocol is defined globally for all handshake ports.

The components of the handshake port in the upper part of Fig. 9 serve for generating and providing an output signal *HPO.* The output signal *HPO* is generated using the value of the TFF in dependence on an input signal SND. SND signalizes whether or not an output event shall be generated. Since in the case of 4-phase protocols the value Q(*OUT*) of the TFF *OUT* corresponds to that of the initial state (NULL value), and in the case of 2-phase protocols corresponds to that of the previous value, simply setting the signal *SND* to logic 1 generates the signal event corresponding to the respective protocol (so called protocol event). For generating such an event the test processor provides instructions *set.req,* and *set.ack.* An exception is formed by setting a *request* in the case of dual-rail protocols because this is encoded in the data lines in such protocols. To this end, two consecutive I/O-ports are used, in order to generate the DUAL-RAIL encoded data word and the corresponding *Request.* The first I/O port $P_i$ therefore has the unchanged value of the data word $d$ to be transmitted, and the second port $P_{i+1}$, has the value forming the inverse of $d$. For directly implementing such behaviour, the TP provides an instruction *out.gr RPort, RData,* which writes the value of the register *RData* as a dual-rail encoded word into two consecutive I/O-ports.

The components of the lower part of Fig. 8 are used to detect an incoming protocol event. The two DFFs *SYNCH_1* and *SYNCH_2* form a 2-flop synchronizer. This synchronizer is used for filtering out metastability. The output signal of this synchronizer is combined with the signal TFF *OUT* by means of an XOR gate, in order to generate an output signal EV, which shows, whether an incoming signal event has occurred. For detecting such a protocol event, the test processor of embodiment 2 provides two types of instructions:

a) wait instructions (*wait.req*/*wait.ack RHPort after RTimeout* bal *RAddr)* stall the execution of a program executed by the test processor for as long as the corresponding protocol event is being detected, or until a time limit (measured in TP clock cycles) has been exceeded. In the latter case, the test processor jumps to the program address defined by *RAddr.* This way, error handling routines may be called up. The current value of the program counter is stored in register *R14.*

b) branch instructions (B.req/b.ack *RHPort, RAddr*) branch to a program address defined by *RAddr upon* detecting the corresponding signal event.

The use of wait instructions is to be preferred whenever a strict sequence of data transfers is to be implemented, because these instruction react faster to a protocol event. Pseudo-parallel protocol events or events occurring at different ports, the time order of which cannot be determined exactly, can only be realized with a loss in performance by this technique. However, it is possible to let the test processor initiate a data transfer on one channel and wait for the DUT to respond with an acknowledgement. If the DUT also waits for the test processor on a different channel - for instance an output channel of the DUT - to provide an Acknowledgement, the whole system is in a deadlock. Therefore, branch instructions are a better choice to avoid this situation. In a loop several handshake ports may be checked for incoming protocol events, for which a reaction is than initialized.

For implementing 4-phase protocols, a further instruction is provided by the test processor. This instruction realizes two *Return-to-zero* phases of the protocol. That is, in the case of an outgoing data transfer, at first HPO is set to its initial state (value of the DFF *OUT*) by the test processor and it is subsequently waited for *HPI* to take on its initial state Q(*IN*). In the case of incoming data transfers, the order is the opposite. The syntax of the instruction is identical with that of wait instructions, except for the name of the instruction: rtz.req/rtz.ack *RHPort after RTimeout bal RAddr.*

c. Memory access

The test arrangement of embodiment 2 has separate program and data memory. The memory may be arranged in the test processor. The memory may be realized by single-port RAM components addressing is performed by word, which results in a maximum capacity of the respective memories of 16 GB. For reading and writing of register contents, the test processor provides instructions *lwlsw Rx, Offset (RBase)*. For loading of patterns for functional tests from the data memory to an I/O-port or for storing of response signatures received from the DUT, which are applied to a I/O-port, in an accelerated manner, the test processor of embodiment 2 provides the instructions *lwp/swp RPort, Offset*. These instruction access the value of the address register of the port and increase this value after finalizing the access by the value *Offset*. These instruction accordingly perform all functions, for which embodiment 1 requires 4 instructions: loading the address (1-2 instructions), data transfer between memory and I/O-port (2 instructions), updating the address (1 optional instruction) and storing the address (1 instruction). The instruction *cmp RPort, RSig, Offset* even goes one step further. this instruction reads the signature of an I/O-port and an expected signature from the memory (at the address defined by the address register) and compares these with each other by means of bitwise anti-valence. The resulting signature is written to the register *RSig* and checked for equivalence with 0. If this is not the case, an error register is set, which is accessible for the test arrangement by means of the status output.

d. Extended instruction set

The instruction set of the test processor of embodiment 2 is extended in comparison with that of embodiment 1 due to the extended word length. It is adapted to the structure of instructions of other 32-bit RISC processors. For most operation this means that a destination register has to be named, and not only the operand. The most important standard instructions are the following:

- arithmetic operations: add, addi, sub, subi, inv, etc

- logic operations: not, and, or xor, ect

- shift operations: sll, srl, sra, etc

- control operations: j, jr, jal, beq, blt, bgt, etc

The test processor provides special instructions on top of these standard instructions, in order to allow reading and writing of data at the I/O ports, to support the asynchronous handshake protocols and to provide functions for generating test patterns and compressing response data. The test processor of embodiment 2 does not rely on dedicated registers in the set of registers, which have to be used as LFSR/MISR. This limitation of embodiment 1 is not a requirement for the test processor of embodiment 2. The instructions of embodiment 2 are defined in a manner allowing a definition of an arbitrary register as a source register or as a destination signature register. A further register is used for configuration of the significant bits, the combination of which by means of anti-valence (logic XOR function) represents the least significant bit of the signature register. Additionally, the instructions, by means of the mentioned indirect addressing, have to be accompanied by an argument indicating a respective I/O-port. This is necessary because in the cause of generating test patterns, a signature is transferred directly to the indicated I/O-port or is read from the port in the cause of compressing the test pattern.

- *lfsr RSig, RMask, RPort* - generates a signature from *RSig* with a mask from register *RMask* and writes the resulting signature into the register *RSig,* as well as to the I/O-port, which is defined by the lower 4 bits of the register *RPort.*

- *lfsr.dr RSig, RMask, RPort - works* exactly like *lfsr,* wherein the generated signature is output as a Dual-Rail code at two consecutive ports (defined by *RPort*).

- *misr RSig, RMas, RPort* - combines the signature from register *RSig* with the signature, which is applied to the I/O-port defined by *RPort* and writes the resulting into the register *RSig.*

f. Programming the test processor

A programming example for the test processor of embodiment 2 is shown below with Listing 3.

```
.data .align 4
_dout_p0:  .word 0x1efad1c7 0x2da93c5b ... ; Input stimuli
_din_p1:   .word 0x45ac712d 0x6ab28d2f ... ; Expected responses

.text
_main:                          ; Definition of protocol type
    ldc r0, 0x6                 ; 6 => 2-phase single-rail
    ldc r1, 0                   ; load index 0 and
    ldc r2, 1                   ; load index 1 for setting
    sahp r1, r0                 ; I/O-port 0 and
    sahp r2, r0                 ; I/O-port 1 to the desired protocol
```

```
        lui r0, (_dout_p0 >> 16)  ; Load address of _dout_p0 into r0 and
store it
        ori r0, r0, _dout_p0      ; in address register of I/O-port 0
(remember
        rtm r1, r0                ; r0 stores index 0 for indexing I/O-
port 0

        lui r0, (_din_p1 >> 16)   ; Load address of _dout_p1 into r1 and
store it
        ori r0, r0, _din_p1       ; in address register of I/O-port 1
(remember
        rtm r2, r0                ; r0 stores index 1 for indexing I/O-
port 1

        lui r0, (_err >> 16)      ; Load address
        ori r0, r0, (_err)        ; of _err to r0
        lui r3, (_din >> 16)      ; and load address
        ori r3, r3, _din          ; of _din to r3

        ldc r1, 10       ; Set r1 to 10 which is used as the timeout
counter
        ldc r9, 0        ; Set r9 to 0 used as an error counter
        ldc r10, 0       ; Set r10 to 0 used for check the return value
of _err

        ; Block for sending data
_dout:                   ; Load test pattern to I/O-port 0,
        lwp r1, 1        ; increment the address register value by 1,
        set.req r1       ; set the request
        j _breq          ; and jump to _breq

        ; Block for receiving data
_din:                    ; Receive and compare the signature of
        cmp r2, r8, 1    ; I/O-port 1 with the expected signature
        set.ack r2       ; set the acknowledgment
        j _back          ; and jump to _back

        ; Block for waiting for an acknowledgment
_back:                   ; set the value of r0 to 0, thus, the value 1 of
r0 will
        ldc r0, 0        ; indicate that _err was called by the next
instruction
        wait.ack r1 after r1 bal r0 ; wait for acknowledgment of
handshake-port 0
        beq r0, r10, _dout ; if r0 is 0 then send new data via calling
_dout

        ; Block for checking for a request
_breq:                   ; if a request was encountered at HP 1
        b.req r2, r3     ; then branch to _din, otherwise
        j _back          ; jump to _back

        ; Error handling routine
_err:
        addi r9, r9, 1   ; Increment error counter
        ldc r0, 1        ; set return value
        jr r14           ; and jump back to the caller.
```

For reasons of simplicity, the I/O-port and handshake port 0 and the I/O-port and handshake port 1 respectively form one asynchronous channel. First, similar to the programming of the processor of embodiment 1, the handshake ports have to be configured. In the present case, both handshake ports are configured such that they operate in accordance with the 2-phase Single-Rail protocol, and the TFFs are initialized with the value 0. Further initializations, such as the configuration of the I/O-port masks, are not shown for reasons of brevity. After that, addresses of the data fields _dout_p0 and _din_p1 are calculated and stored into the address registers of the I/O-ports P0 and P1, respectively, by means of the *rtm* instruction. Semantically, _dout_p0 is the input test pattern and _din_p1 is the response signature of the DUT. After a series of further program address calculations and after setting a time limit, the actual sequence for performing the asynchronous communication is provided. The program block starting from the *mark_dout* loads a data word into the data register of I/O-port P0 and initializes the outgoing data transfer by setting the *Request* at the handshake port *HP0*. Correspondingly, in the block starting with the mark_*din* the response signature of the DUT at I/O-port P1 is read and at the same time compared with the expected signature (values in the field _din_ p1). This is done using the instruction *cmp*. The program blocks starting from the marks _breq and _back serve for detecting and reacting, respectively, to the protocol events. The program flow then is as follows: first, the test pattern is output at P0. Then it is checked whether an incoming *Request* is present at *HP1.* If this is the case, a comparison of signatures is performed at P1. If this is not the case, waiting for an acknowledgement starts by means of *wait.ack* at *HP0.* If this is detected, the next test pattern is applied at P0. Otherwise, an error counter is incremented.

C. Workflow

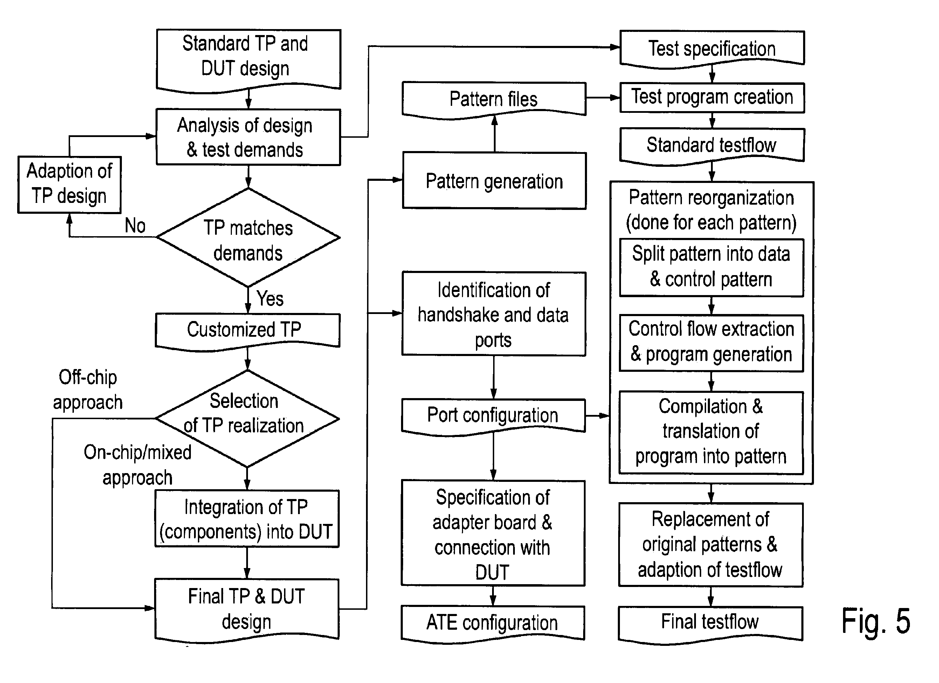

The integration of the TP into the test strategy requires further steps to be done by the test engineer but also by the designer in case the on-chip approach shall be applied. Therefore, we propose the workflow given in Fig. 5 that outlines the required steps. The first activity in the workflow is to analyze the design and to determine the demands of the test. This activity directly delivers the test specification including level definition and a list of tests to be performed. After that one needs to clarify whether the TP already fits to the identified demands. If not, the TP can be adapted (e.g. with respect to the protocols to be supported) resulting in a customized version of the TP. At this point one needs to select the realization scheme (off/on-chip or mixed approach). If the on-chip or the mixed approach is chosen, (components of) the TP need(s) to be integrated into the DUT. In any case one will end up with the final TP and DUT designs. On the one hand these designs are required to generate test patterns. On the other hand the designs are needed for identifying the handshake and data ports of the DUT to be connected with the TP as well as the TP ports to be connected with the tester. Thus, a complete port configuration is delivered that is prerequisite for the development of the adapter board and for the reorganization of patterns. This is required since the (functional) patterns are just generated for the DUT without consideration of the TP and the timing nondeterminism. Thus, the control signals dedicated to asynchronous handshaking need to be removed from the pattern and replaced by respective handshake operations executed by the TP. Therefore, we plan to develop a tool that separates the data from the handshake vectors (i.e. the control flow). The data vectors directly designate the content of the data memory of the TP. Then each handshake in the control flow is translated into a corresponding sequence of TP instructions. The resulting code is compiled then and afterwards translated into a pattern which will be extended by additional control vectors required for setting up the TP. These steps of reorganizing the patterns will be performed by a tool that is currently under conception. Finally, each of the original patterns within the previously created testflow will be replaced by the generated patterns.

D. Experimental results and practical application

In order to show the applicability of integrating the entire TP into a design we have synthesized different versions of the processor using Synopsys Design Compiler and our IHP 0.25$\mu$m technology.

a. Embodiment 1

We implemented protocol specific versions that support only one protocol, one version supporting all protocols and one version with no handshake protocol support. For each version we defined an operating frequency of 25MHz. The following table compares the chip area required for the different implementations.

**Table 1: Chip Area required by different test processor variants**

| Design | Area in [mm$^2$] |
|---|---|
| TP (no protocol support, 25 MHz) | 0.29254175 |
| TP (all protocol types, 25 MHz) | 0.204292364 |

(continued)

| Design | Area in [mm$^2$] |
|---|---|
| TP (2-phase single-rail, 25 MHz) | 0.265637227 |
| TP (4-phase single-rail, 25 MHz) | 0.310287595 |
| TP (4-phase dual-rail, 25 MHz) | 0.287898907 |
| TP (all protocols, 100 MHz) | 0.283065547 |

An embodiment of a proposed TP with no protocol support utilizes a slightly larger area than known TP designs. However, since the proposed processor has a four-stage pipeline that supports features like operand forwarding which significantly accelerates the program execution, this overhead is still acceptable. Furthermore, the processor versions dedicated to one protocol have an additional area overhead of 8-13% in relation to the version without any protocol support. The processor version that supports all protocols has an area overhead of 17%. Moreover, we validated the TP by implementing the version that supports all asynchronous handshake protocols using a Xilinx board equipped with a Virtex-4 for a frequency of 50MHz.

In consideration of the practical application of the TP, the operating frequency of 25 MHz chosen for the synthesis may be too low for testing high-performance designs. This is even more emphasized with regard to the fact that the processor requires at least three instructions in order to apply/receive one data word of 16-bit and to perform one handshake. Additionally, the processor needs to receive and apply data. Thus, with an operating frequency of 25 MHz the effective frequency of applying and receiving data in one sequence is below 4.17 MHz. However, since the TP design is relatively simple the frequency can be increased to a value of approx. 100 MHz and more. Furthermore, for the off-chip approach two processors may be utilized: one for applying and one for receiving patterns.

b. Embodiment 2

The test processor of embodiment 2 was implemented using the Design Compiler by Synopsys and the 0.13 $\mu$m technology of the applicant, on a Virtex-5 LX 330 FPGA. The target frequency was defined to be 100 MHz. The results of the synthesis show that the test process of embodiment 2 requires 0.271554 mm$^2$, approximately an area three times as large as that required by embodiment 1, which requires an area of 0.085993 mm$^2$.

However, it has to be taken into account that the number of I/O-ports and their word length are twice as large now. Additionally, the structure of the I/O-port has been extended, such that the area of the I/O-ports alone is larger by a factor of 6 to 8. However, since the test processor was implemented on a FPGA and shall be mounted onto an adapter board of the test arrangement, the chip area is not of high importance. Results for the mentioned FPGA have shown that only 1 % of the slice registers, 3 % of the LUTs, and as much 48 % of the input and output pins are in use. Advantages of the test processor of the test processor of embodiment 2 are, among others, that certain loops do comprise less instructions and that the execution of a program is strongly accelerated, thus reducing the time required for testing.

SUMMARY

The disclosed TP embodiments enable functional tests of asynchronous semiconductor devices. In summary, the test processor of the present invention provides special support for asynchronous handshake signalling. Several realization versions of the concept are disclosed. In particular, one can implement the processor off-chip using an FPGA and mount it onto the load board of the tester; one can integrate the entire processor on-chip into the design, and finally one can combine both approaches by integrating several components into the design and realize the processor core via the off-chip approach. The processor itself may be implemented in a configurable manner using the LISA processor description language. Thus, one can generate a processor that supports any combination of the most common asynchronous handshake protocols. Synthesis results achieved by the inventors show that even the overhead for integrating the processor can be tolerated under consideration of the possibility of performing in-field tests and/or power management. Additional embodiments further optimize the design with respect to its operating frequency, support direct memory accesses (DMAs) of the ports and further improve the instruction set. A special PCB board equipped with an FPGA which can be mounted onto the load board of the tester equipment can be used to implement a desired test infrastructure.

**Claims**

1.  A test processor (TP) for testing an integrated circuit component (DUT), hereinafter DUT, the DUT being arranged externally to the test processor and configured to asynchronously communicate with the test processor (TP), the claimed test processor comprising:

- a test processor (TP) core
- a port component, which

    a) is connected with the test processor core and which
    b) comprises a first set of ports (P0, ...,P7), hereinafter I/O ports, which are configured to perform synchronous communication with a tester equipment (ATE) that is external to the test processor and to which the test processor is connectable, and which
    c) comprises a second set of ports (HP0,...HP3), hereinafter handshake ports, which are configured to perform asynchronous communication with a DUT to which the test processor (TP) is connectable, using an asynchronous handshake protocol,

- a memory interface, which is connectable to the tester equipment (ATE) and to a memory for storing test patterns to be communicated to the DUT and for storing at least one test program executable by the test processor (TP), the memory interface being configured to perform memory operations in accordance with instructions received from the tester equipment (ATE).

2. The test processor of claim 1, wherein the test processor core comprises a four stage processor pipeline (Pipe.FE, Pipe.DC, Pipe.EX, Pipe.WB) configured to perform operand forwarding.

3. The test processor of claim 1 or 2, wherein the test processor core is configured to operate synchronously.

4. The test processor of one of the preceding claims, wherein the handshake ports (HP0,...HP3) each comprise an input port configured to receive request signals and/or acknowledge signals coming from the DUT and an output port configured to provide request signals and/or acknowledge signals from the test processor to the DUT.

5. The test processor of one of the preceding claims, wherein the first set of ports P0, ...,P7) is configured for communication with the DUT in accordance with a dual-rail protocol, and wherein two respective consecutive I/O ports are configured to provide at their output an encoded dual-rail data word that includes request information.

6. The test processor of one of the preceding claims, wherein the port component is configured to set and receive request and acknowledgement signals in communication with the DUT in accordance with at least one handshake protocol selected from a predefined group of supported different handshake protocols.

7. The test processor of claim 6, wherein the port component is configured to set and receive request and acknowledgement signals in communication with the DUT in accordance with different ones of the handshake protocols selected from a predefined group of supported different handshake protocols via different handshake ports.

8. The test processor of claim 6 or 7, wherein the test processor core is configured to

- either receive or generate a protocol type information element identifying a particular handshake protocol from a predefined group of supported handshake protocols;
- to control operation of the port component in accordance with the identified handshake protocol, initializing, if required by the identified handshake protocol, a respective set of handshake signal states before starting operation under the identified handshake protocol.

9. The test processor of one of the claims 6 to 8, wherein the processor core, in expectation of a predefined signal event to be detected by the second set of ports, is configured to generate a wait-for instruction stalling an execution pipeline of the test processor core until the expected signal event is detected, and specifying a program address of a program currently executed by the test processor core and a number of time units after which execution of program is to be resumed by the processor core at the specified program address.

10. The test processor of one of the preceding claims, comprising a program memory for storing at least one executable program

11. The test processor of one of the preceding claims, wherein the memory interface has a control interface unit configured to be directly connected to the tester equipment (ATE) for receiving from the tester equipment control information, for receiving from the tester equipment payload data to be stored in the memory, and for outputting to the tester equipment payload data stored in the memory.

12. A test arrangement for testing a device under test, hereinafter DUT, the DUT exhibiting a non-deterministic timing behaviour, the claimed test arrangement comprising

 - a tester equipment
 - a test processor in accordance with one of the claims 1 to 11, and
 - a memory connected with the tester equipment and the test processor.

13. The test arrangement of claim 12, wherein the memory comprises separated data and program memories that have single-port memory blocks.

14. An integrated circuit component, which is configured to communicate asynchronously with external circuits, the integrated circuit component comprising a test processor in accordance with one of the claims 1 to 11

15. An integrated circuit component (DUT), hereinafter DUT, which is configured to communicate asynchronously with external circuits and exhibits a non-deterministic timing behaviour, the integrated circuit component comprising

 - an asynchronous port component for use in normal operation and being configured to communicate asynchronously with at least one external circuit; **characterized in**
 - a test port component only for use in testing the integrated circuit component, the test port component having a first set of ports connectable with a test processor (TP) that is external to the integrated circuit component (DUT), for exchanging test data with a test processor core of the test processor in a synchronous manner, the test port component additionally comprising a second set of ports, which are configured to perform asynchronous communication with the circuits of the DUT that communicate asynchronously with external circuits, using an asynchronous handshake protocol.

**Patentansprüche**

1. Prüfprozessor (TP) zum Prüfen einer IC-Komponente (DUT), im Folgenden DUT, wobei das DUT extern zum Prüfprozessor angeordnet ist und ausgebildet ist, asynchron mit dem Prüfprozessor (TP) zu kommunizieren, wobei der beanspruchte Prüfprozessor umfasst:

 - einen Prüfprozessorkern (TP)
 - eine Portkomponente, die

 a) mit dem Prüfprozessorkern verbunden ist und die
 b) einen ersten Satz von Ports (P0,...,P7), im Folgenden I/O-Ports, umfasst, die ausgebildet sind, eine synchrone Kommunikation mit einer Prüfapparatur (ATE) durchzuführen, die extern zum Prüfprozessor ist und mit der der Prüfprozessor verbindbar ist, und die
 c) einen zweiten Satz von Ports (HP0,...,HP3), im Folgenden Handshake-Ports, umfasst, die ausgebildet sind, eine asynchrone Kommunikation mit einem DUT, mit dem der Prüfprozessor (TP) verbindbar ist, unter Verwendung eines asynchronen Handshake-Protokolls durchzuführen,

 - eine Speicherschnittstelle, die mit der Prüfapparatur (ATE) und mit einem Speicher zum Speichern von Prüfmustern zur Übermittlung an das DUT und zum Speichern wenigstens eines Prüfprogramms, welches durch den Prüfprozessor (TP) ausführbar ist, verbindbar ist, wobei die Speicherschnittstelle ausgebildet ist, Speicheroperationen gemäß von der Prüfereinrichtung (ATE) empfangenen Instruktionen durchzuführen.

2. Prüfprozessor nach Anspruch 1, bei dem der Prüfprozessorkern eine 4-Stufen-Prozessor-Pipeline (Pipe.FE, Pipe.DC, Pipe.EX, Pipe.WB) umfasst, die ausgebildet ist, eine Operandenweiterleitung auszuführen.

3. Prüfprozessor nach Anspruchs 1 oder 2, bei dem der Prüfprozessorkern ausgebildet ist, synchron zu arbeiten.

4. Prüfprozessor nach einem der vorstehenden Ansprüche, bei dem die Handshake-Ports (HP0,...,HP3) jeweils einen Eingangsport aufweisen, der ausgebildet ist, vom DUT kommende Anfragesignale und/oder Bestätigungssignale zu empfangen, und einen Ausgangsport, der ausgebildet ist, Anfragesignale und/oder Bestätigungssignale vom Prüfprozessor dem DUT zur Verfügung zu stellen.

5. Prüfprozessor nach einem der vorstehenden Ansprüche, bei dem der erste Satz von Ports (P0,...,P7) zur Kommunikation mit dem DUT gemäß mit einem Dual-Rail-Protokoll ausgebildet ist, und bei dem zwei jeweilige aufeinanderfolgende I/O-Ports ausgebildet sind, an ihrem Ausgang ein kodiertes Dual-Rail-Datenwort bereitzustellen, das Anfrageinformationen umfasst.

6. Prüfprozessor nach einem der vorstehenden Ansprüche, bei dem die Portkomponente ausgebildet ist, in Kommunikation mit dem DUT gemäß mindestens einem Handshake-Protokoll, das aus einer vordefinierten Gruppe verschiedener unterstützter Handshake-Protokolle ausgewählt ist. Anfrage- und Bestätigungssignale zu setzen und zu empfangen.

7. Prüfprozessor nach Anspruch 6, bei dem die Portkomponente ausgebildet ist, in Kommunikation mit dem DUT gemäß verschiedenen der Handshake-Protokolle, die aus der vordefinierten Gruppe verschiedener unterstützter Handshake-Protokolle ausgewählt sind, über verschiedene Handshake-Ports Anfrage- und Bestätigungssignale zu setzen und zu empfangen

8. Prüfprozessor nach Anspruch 6 oder 7, bei dem der Prüfprozessorkern ausgebildet ist,

   - ein Protokolltyp-Informationselement entweder zu erhalten oder zu generieren, welches ein bestimmtes Handshake-Protokoll aus einer vordefinierten Gruppe unterstützter Handshake-Protokolle identifiziert;
   - wenn vom identifizierten Handshake-Protokoll gefordert, den Betrieb der Portkomponente gemäß dem identifizierten Handshake-Protokoll durch Initialisieren eines betreffenden Satzes von Handshake-Signalzuständen vor dem Starten des Betriebs unter dem identifizierten Handshake-Protokoll zu steuern.

9. Prüfprozessor nach einem der Ansprüche 6 bis 8, wobei der Prozessorkern, in Erwartung eines vordefinierten, vom zweiten Satz von Ports zu detektierenden Signalereignisses, ausgebildet ist, eine Warten-auf-Anweisung zu erzeugen, die eine Ausführungs-Pipeline des Prüfprozessorkerns aussetzt, bis das erwartete Signalereignis detektiert ist, und die eine Programmadresse eines derzeit vom Prüfprozessorkern ausgeführten Programms angibt, und eine Anzahl von Zeiteinheiten, nach denen die Ausführung des Programms vom Prozessorkern an der angegebenen Programmadresse wieder aufgenommen wird.

10. Prüfprozessor nach einem der vorstehenden Ansprüche, umfassend einen Programmspeicher zum Speichern mindestens eines ausführbaren Programms.

11. Prüfprozessor nach einem der vorstehenden Ansprüche, bei dem die Speicherschnittstelle eine Steuerschnittstelleneinheit hat, die ausgebildet ist, direkt mit der Prüfapparatur (ATE) verbunden zu werden, zum Empfangen von Steuerinformationen von der Prüfapparatur, zum Empfangen Nutzdaten von der Prüfapparatur, die im Speicher abzulegen sind, und zum Ausgeben von im Speicher gespeicherten Nutzdaten an die Prüfapparatur.

12. Prüfanordnung zum Prüfen eines zu prüfenden Bauelements, im Folgenden DUT, wobei das DUT ein nicht-deterministisches Zeitverhalten aufweist und wobei die beanspruchte Prüfanordnung umfasst:

   - eine Prüfapparatur
   - einen Prüfprozessor gemäß einem der Ansprüche 1 bis 11, und
   - einen mit der Prüfapparatur und dem Prüfprozessor verbundenen Speicher.

13. Prüfanordnung nach Anspruch 12, bei der der Speicher getrennte Daten- und Programmspeicher umfasst, die Einzelport-Speicherblöcke aufweisen.

14. IC-Komponente, die ausgebildet ist, asynchron mit externen Schaltkreisen zu kommunizieren und die einen Prüfprozessor gemäß einem der Ansprüche 1 bis 11 umfasst.

15. IC-Komponente (DUT), im Folgenden DUT, die ausgebildet ist, asynchron mit externen Schaltkreisen zu kommunizieren und die ein nicht-deterministisches Zeitverhalten ausweist, wobei die IC-Komponente umfasst:

   - eine asynchrone Portkomponente zur Nutzung im normalen Betrieb und ausgebildet, asynchron mit wenigstens einem externen Schaltkreis zu kommunizieren; **gekennzeichnet durch**

- eine Prüfportkomponente nur zur Nutzung beim Prüfen der IC-Komponente, wobei die Prüfportkomponente einen ersten Satz von Ports hat, die mit einem Prüfprozessor (TP) verbindbar sind, welcher extern zur IC-Komponente (DUT) ist, zum Austausch von Prüfdaten mit einem Prüfprozessorkern des Prüfprozessors in synchroner Weise, wobei die Prüfportkomponente zusätzlich einen zweiten Satz von Ports umfasst, die ausgebildet sind, eine asynchrone Kommunikation mit denjenigen Schaltkreisen des DUT zu führen, die asynchron mit externen Schaltkreisen kommunizieren, unter Verwendung eines asynchronen Handshake-Protokolls.

## Revendications

1.  Processeur de test (TP) destiné à tester un composant de circuit intégré (DUT), ci-après appelé « DUT », le DUT étant agencé à l'extérieur du processeur de test et configuré de manière à communiquer de façon asynchrone avec le processeur de test (TP), le processeur de test revendiqué comprenant :

    - un coeur de processeur de test (TP) ;
    - un composant de port, qui

        a) est connecté au coeur de processeur de test, et qui
        b) comporte un premier ensemble de ports (P0, ..., P7), ci-après appelés ports I/O, lesquels sont configurés de manière à mettre en oeuvre une communication synchrone avec un équipement de testeur (ATE) qui est agencé à l'extérieur du processeur de test et auquel peut être connecté le processeur de test, et qui
        c) comprend un second ensemble de ports (HP0, ..., HP3), ci-après appelés ports d'établissement de liaison, qui sont configurés de manière à mettre en oeuvre une communication asynchrone avec un DUT auquel peut être connecté le processeur de test (TP), en utilisant un protocole d'établissement de liaison asynchrone ;

    - une interface de mémoire, qui peut être connectée à l'équipement de testeur (ATE) et à une mémoire pour stocker des motifs de test destinés à être communiqués au DUT et pour stocker au moins un programme de test exécutable par le processeur de test (TP), l'interface de mémoire étant configurée de manière à mettre en oeuvre des opérations de mémoire conformément à des instructions reçues de l'équipement de testeur (ATE).

2.  Processeur de test selon la revendication 1, dans lequel le coeur de processeur de test comprend un pipeline de processeur à quatre niveaux (Pipe.FE, Pipe.DC, Pipe.EX, Pipe.WB) configuré de manière à mettre en oeuvre un transfert d'opérandes.

3.  Processeur de test selon la revendication 1 ou 2, dans lequel le coeur de processeur de test est configuré de manière à fonctionner de façon synchrone.

4.  Processeur de test selon l'une des revendications précédentes, dans lequel les ports d'établissement de liaison (HP0, ..., HP3) comprennent chacun un port d'entrée configuré de manière à recevoir des signaux de demande et/ou des signaux d'accusé de réception en provenance du DUT et un port de sortie configuré de manière à fournir des signaux de demande et/ou des signaux d'accusé de réception du processeur de test au DUT.

5.  Processeur de test selon l'une des revendications précédentes, dans lequel le premier ensemble de ports (P0, ..., P7) est configuré en vue d'une communication avec le DUT conformément à un protocole « double rail », et dans lequel deux ports I/O consécutifs respectifs sont configurés de manière à fournir, au niveau de leur sortie, un mot de données double rail codé qui inclut des informations de demande.

6.  Processeur de test selon l'une des revendications précédentes, dans lequel le composant de port est configuré de manière à définir et à recevoir des signaux de demande et d'accusé de réception en communication avec le DUT selon au moins un protocole d'établissement de liaison sélectionné parmi un groupe prédéfini de différents protocoles d'établissement de liaison pris en charge.

7.  Processeur de test selon la revendication 6, dans lequel le composant de port est configuré de manière à définir et à recevoir des signaux de demande et d'accusé de réception en communication avec le DUT selon différents protocoles parmi les protocoles d'établissement de liaison sélectionnés parmi un groupe prédéfini de différents protocoles d'établissement de liaison pris en charge, par l'intermédiaire de différents ports d'établissement de liaison.

8.  Processeur de test selon la revendication 6 ou 7, dans lequel le coeur de processeur de test est configuré de manière à :

    - recevoir ou générer un élément d'informations de type de protocole identifiant un protocole d'établissement de liaison spécifique parmi un groupe prédéfini de protocoles d'établissement de liaison pris en charge ;
    - commander l'opération du composant de port conformément au protocole d'établissement de liaison identifié, en initialisant, si requis par le protocole d'établissement de liaison identifié, un ensemble respectif d'états de signaux d'établissement de liaison avant de commencer l'opération en vertu du protocole d'établissement de liaison identifié.

9.  Processeur de test selon l'une des revendications 6 à 8, dans lequel le coeur de processeur, dans l'attente d'un événement de signal prédéfini devant être détecté par le second ensemble de ports, est configuré de manière à générer une instruction d'attente bloquant un pipeline d'exécution du coeur de processeur de test jusqu'à ce que l'événement de signal attendu soit détecté, et spécifiant une adresse de programme d'un programme en cours d'exécution par le coeur de processeur de test, et un nombre d'unités de temps à l'issue desquelles l'exécution du programme doit être reprise par le coeur de processeur à l'adresse de programme spécifiée.

10. Processeur de test selon l'une des revendications précédentes, comprenant une mémoire de programme pour stocker au moins un programme exécutable.

11. Processeur de test selon l'une des revendications précédentes, dans lequel l'interface de mémoire présente une unité d'interface de commande configurée de manière à être connectée directement à l'équipement de testeur (ATE) en vue de recevoir, en provenance de l'équipement de testeur, des informations de commande, de recevoir, en provenance de l'équipement de testeur, des données de charge utile à stocker dans la mémoire, et de générer en sortie, vers l'équipement de testeur, des données de charge utile stockées dans la mémoire.

12. Agencement de test destiné à tester un dispositif sous test, ci-après appelé DUT, le DUT présentant un comportement temporel non déterministe, l'agencement de test revendiqué comprenant :

    - un équipement de testeur ;
    - un processeur de test selon l'une des revendications 1 à 11 ; et
    - une mémoire connectée à l'équipement de testeur et au processeur de test.

13. Agencement de test selon la revendication 12, dans lequel la mémoire comprend des mémoires séparées de données et de programme présentant des blocs de mémoire à port unique.

14. Composant de circuit intégré configuré de manière à communiquer de façon asynchrone avec des circuits externes, le composant de circuit intégré comprenant un processeur de test selon l'une des revendications 1 à 11.

15. Composant de circuit intégré (DUT), ci-après appelé DUT, configuré de manière à communiquer de façon asynchrone avec des circuits externes et lequel présente un comportement temporel non déterministe, le composant de circuit intégré comprenant :

    - un composant de port asynchrone destiné à une utilisation dans le cadre d'un fonctionnement normal, et qui est configuré de manière à communiquer de façon asynchrone avec au moins un circuit externe ; **caractérisé par**
    - un composant de port de test dont l'utilisation est uniquement réservée au test du composant de circuit intégré, le composant de port de test présentant un premier ensemble de ports pouvant être connecté à un processeur de test (TP) qui est externe au composant de circuit intégré (DUT), en vue d'échanger des données de test avec un coeur de processeur de test du processeur de test d'une manière synchrone, le composant de port de test comprenant en outre un second ensemble de ports, configuré de manière à mettre en oeuvre une communication asynchrone avec les circuits du DUT qui communiquent de façon asynchrone avec des circuits extérieurs, en utilisant un protocole d'établissement de liaison asynchrone.

Fig. 1

Fig. 2

Fig. 3

Fig. 4

EP 2 595 059 B1

```
┌─────────────────────┐                                    ┌─────────────────────┐
│   Standard TP and   │─────────────────────────────────→  │  Test specification │
│     DUT design      │                                    └─────────────────────┘
└─────────────────────┘                                              ↓
          ↓                   ┌─────────────────┐          ┌─────────────────────┐
┌─────────────────────┐       │  Pattern files  │────────→ │ Test program creation│
│  Analysis of design │       └─────────────────┘          └─────────────────────┘
│   & test demands    │              ↑                              ↓
└─────────────────────┘              │                     ┌─────────────────────┐
          ↓                   ┌─────────────────┐          │  Standard testflow  │
┌──────────┐                  │Pattern generation│         └─────────────────────┘
│Adaption of│                 └─────────────────┘                   ↓
│ TP design │                        ↑            ┌─────────────────────────────────┐
└──────────┘                         │            │    Pattern reorganization       │
     ↑     No    ◇─────────◇         │            │    (done for each pattern)       │
     └─────────  │ TP matches│        │            │ ┌─────────────────────────────┐ │
                 │ demands   │        │            │ │   Split pattern into data   │ │
                 ◇─────────◇         │            │ │      & control pattern      │ │
                      ↓ Yes           │            │ └─────────────────────────────┘ │
            ┌─────────────────┐       │            │              ↓                  │
            │  Customized TP  │       │  ┌──────────────────┐  │ ┌─────────────────────────────┐ │
            └─────────────────┘       │  │ Identification of │  │ │   Control flow extraction   │ │
                      ↓               │  │handshake and data │  │ │   & program generation      │ │
   Off-chip                           │  │      ports        │  │ └─────────────────────────────┘ │
   approach   ◇─────────────◇         │  └──────────────────┘  │              ↓                  │
             │   Selection   │        │            ↓            │ ┌─────────────────────────────┐ │
             │ of TP realization│     │  ┌──────────────────┐  │ │       Compilation &         │ │
   On-chip/mixed◇─────────────◇       │  │Port configuration│──┼→│      translation of         │ │
   approach            ↓              │  └──────────────────┘  │ │    program into pattern     │ │
            ┌─────────────────┐       │            ↓            │ └─────────────────────────────┘ │
            │ Integration of TP│      │  ┌──────────────────┐  └─────────────────────────────────┘
            │(components) into │      │  │ Specification of │                   ↓
            │       DUT        │      │  │ adapter board &  │         ┌─────────────────────┐
            └─────────────────┘       │  │ connection with  │         │   Replacement of     │
                      ↓               │  │       DUT        │         │ original patterns &  │
            ┌─────────────────┐       │  └──────────────────┘         │  adaption of testflow│
            │  Final TP & DUT │       │            ↓                  └─────────────────────┘
            │     design      │       │  ┌──────────────────┐                   ↓
            └─────────────────┘       │  │ ATE configuration│         ┌─────────────────────┐
                                      │  └──────────────────┘         │   Final testflow    │
                                      │                               └─────────────────────┘
```

Fig. 5

Fig. 6

Fig. 7

**Test Processor Core**

Flags

Control

PortSelect

DataToPort

DataToTP

Address

Control

DataToATE

DataToTP

Address

Status-Flags

Control

**AHL**

Hand-
shake
signals

HP15 • • • HP0

**16x32-Bit I/O-Ports**

P15 • • • P2 P1 P0

**DUT**

**Tester**

EP 2 595 059 B1

Fig. 8

EP 2 595 059 B1

Fig. 9

EP 2 595 059 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090113245 A